# EUROPEAN PATENT APPLICATION

(11) **EP 4 757 122 A1**
(43) Date of publication of application: **10.06.2026**
(21) Application number: 25214611.3
(22) Date of filing: 10.11.2025
(51) Int. Cl.: H02K 1/02, H02K 1/24, H02K 15/021, H02K 15/0273, H02K 15/0278

(54) **GRADED MAGNETIC PERMEABILITY COMPONENT**

(30) Priority: 04.12.2024 US 202418968848
(71) Applicant: Honeywell International Inc., Charlotte, NC 28202 (US)
(72) Inventor: LI, Tianlei, Charlotte 28202 (US)
(74) Representative: Ingrassia, Fisher & Lorenz UK Ltd.

(57) **Abstract**

Systems and methods for a graded magnetic permeability component are described herein. In certain embodiments, an apparatus includes a magnetic component (209), where the magnetic component includes a first region (217) composed of a first material having a relative permeability greater than or equal to 10. The magnetic component also includes a second region (219) composed of a second material having a relative permeability less than or equal to 2, wherein the magnetic component comprises alternating layers of the first region and the second region. Further, the magnetic component includes an interface layer between each of the alternating layers of the first material and the second material. Moreover, the first and second materials have elements diffuse into the interface layer at conditions associated with a manufacturing process. The manufacturing process is at least one of a welding joining process; a brazing joining process; an additive manufacturing process; and a sintering process.

## Description

### BACKGROUND

Many systems employ electric motors within machinery to produce mechanical energy for the performance of necessary tasks. For example, electric motors perform central functions within turbines, compressors, pumps, electric vehicles, and many other applications. When employed, the electric motors convert electrical energy into mechanical energy to drive a connected rotor. The rotor is then connected to a different physical system that applies the rotational energy for the performance of a desired mechanical task.

### SUMMARY

Systems and methods for a graded magnetic permeability component are described herein. In certain embodiments, an apparatus includes a magnetic component, where the magnetic component includes a first region composed of a first material having a relative permeability greater than or equal to 10. The magnetic component also includes a second region composed of a second material having a relative permeability less than or equal to 2, wherein the magnetic component comprises alternating layers of the first region and the second region. Further, the magnetic component includes an interface layer between each of the alternating layers of the first material and the second material. Moreover, the first material and the second material have elements diffuse into the interface layer at conditions associated with a manufacturing process. The manufacturing process is at least one of a welding joining process; a brazing joining process; an additive manufacturing process; and a sintering process.

### BRIEF DESCRIPTION OF DRAWINGS

Drawings accompany this description and depict only some embodiments associated with the scope of the appended claims. Thus, the described and depicted embodiments should not be considered limiting in scope. The accompanying drawings and specification describe the exemplary embodiments, and features thereof, with additional specificity and detail, in which:
FIG. 1 is a block diagram of a system employing a motor for generating mechanical energy according to an aspect of the present disclosure;
FIG. 2 is a diagram of a graded magnetic permeability component employed as a rotor within an electric motor according to an aspect of the present disclosure; and
FIG. 3 is a flowchart diagram of a method for fabricating a graded magnetic permeability component according to an aspect of the present disclosure.

Per common practice, the drawings do not show the various described features according to scale, but the drawings show the features to emphasize the relevance of the features to the example embodiments.

### DETAILED DESCRIPTION

The following detailed description refers to the accompanying drawings that form a part of the present specification. The drawings, through illustration, show specific illustrative embodiments. However, it is to be understood that other embodiments may be used and that logical, mechanical, and electrical changes may be made.

Systems for a graded magnetic permeability component and methods of forming the graded magnetic permeability component are described herein. Further, a graded magnetic permeability component formed according to these systems and methods may be used within an electric motor. In particular, the magnetic permeability component includes a first region composed of a first magnetic material that has a relative permeability greater than or equal to ten. Also, the magnetic permeability component includes a second region composed of a second non-magnetic material having a relative permeability less than or equal to two. Additionally, the magnetic permeability component may include alternating layers of the first region and the second region. Further, the magnetic permeability component may include multiple interface layers interposed between the alternating layers of the first region and the second region. To form the interface layers, various manufacturing processes may impose conditions that cause elements of the first material and the second material to diffuse into each other to form the interface layer. Examples of the various manufacturing processes may include high and low temperature welding joining processes, brazing joining processes, additive manufacturing processes, and sintering processes.

In some systems, permanent magnet motors (PMM) are employed to convert electrical energy into mechanical energy for the performance of one of many potentially different mechanical tasks. Alternatively, a PMM may be used in a generator to convert mechanical energy into electrical energy. To perform the conversion of electrical energy into mechanical energy or vice versa, PMMs employ permanent magnets from critical rare-earth elements (CREEs) that include Dysprosium (Dy), Neodymium (Nd), Europium (Eu), Yttrium (Y), and Terbium (Tb), among others to achieve the desired performance. CREEs are particularly useful within PMMs because CREE can be combined with other elements (for example, neodymium (NdFeB), samarium-cobalt (SmCo), etc.) to form materials that have strong magnetic properties that are able to stay magnetized, even when subjected to high temperatures and mechanical stresses that can arise during the operation of PMMs.

However, the reliance on using CREEs in PMMs is subject to challenges that lead to uncertainty about whether sufficient CREEs are available to meet the demand needed for using PMMs. For example, CREEs are subject to supply chain issues. In particular, CREEs are primarily mined within a limited number of regions in the world. Thus, some countries may disproportionately control the production of CREEs needed for the global supply. Accordingly, the acquisition of CREEs from these countries may be subject to political situations that can destabilize supply chains and increase price volatility. Additionally, the extraction and processing of CREE from the ground may have significant environmental impacts. In particular, the production of CREE may have environmental impacts that include habitat destruction, water contamination, toxic waste generation, among others. Thus, it is desirable to find motors that can provide the desired performance without relying on the supply challenges associated with the reliance on CREEs in PMMs.

In certain embodiments, to avoid overreliance on volatile CREEs, a magnetic permeability component may function within a motor as a laminate having regions with different magnetic permeabilities. The regions with different magnetic permeabilities may help generate guided magnetic flow paths and increase the power density of the motor. Further, the integration of the regions may have sufficient strength to enable the use of the motor in high-speed applications. As the magnetic permeability component can have both high strength and high magnetic saturation flux density, the magnetic permeability component can be used within electric motors (like synchronous reluctance motors (SRMs)) at high speeds while overcoming or avoiding the challenges associated with PMMs that rely on CREEs.

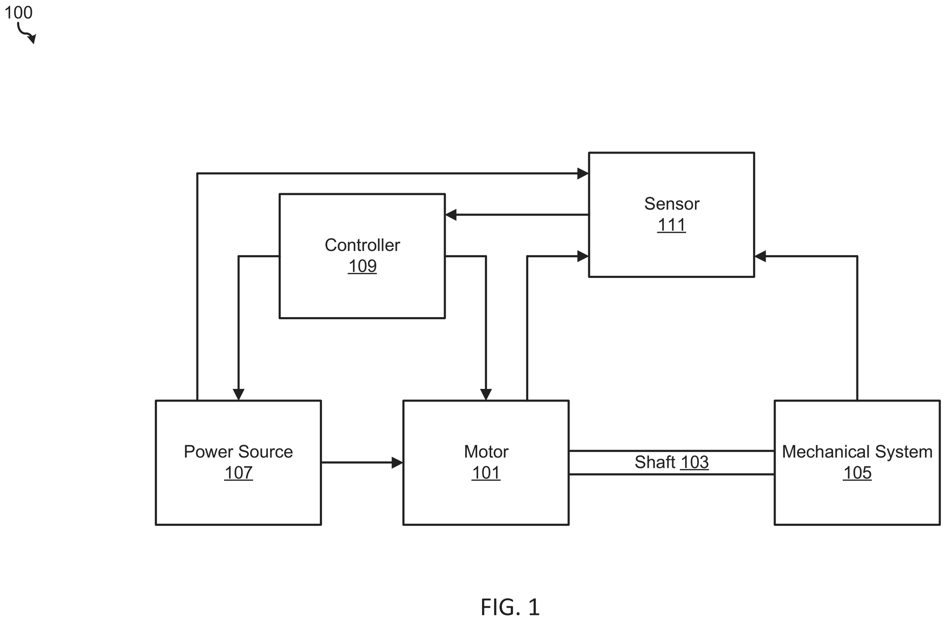

FIG. 1 is a block diagram of a system 100 that employs an electric motor 101. As used herein, the electric motor 101 may be a device that converts electrical energy from a power source 107 into mechanical energy that can be used by a mechanical system 105 to perform one or more mechanical tasks. Conversely, the electric motor 101 may function like a generator (not shown), where the electric motor 101 receives mechanical energy to generate electrical energy for one or more other electrical systems.

An electric motor 101 typically includes two parts: a stator and a rotor. As used herein, a stator may refer to the stationary part of the motor 101 that is coupled to receive electrical energy from a power source 107. In particular, the stator may be a stationary portion of the electric motor 101 that receives the electrical energy from the power source 107 and produces a rotating magnetic field through energized windings (like copper coils) within the stator. The rotating magnetic field then exerts a magnetic force on magnetic components in the rotor that causes the rotor to rotate. Thus, as used herein, the rotor may refer to the rotating component of the electric motor 101. As shown, the rotor may connect to a shaft 103 that extends out of the electric motor 101 to provide mechanical energy to the mechanical system 105. In alternative implementations (not shown), the shaft 103 may be coupled to a mechanical energy transmission system that conveys the produced mechanical energy to the mechanical system 105. While not shown, when the electric motor 101 is used to generate electricity, the shaft 103 may receive mechanical energy from a physical power source that causes the shaft 103 to rotate and the connected rotor to also rotate, where rotating magnetic components in the rotor exert magnetic forces on the windings in the stator that induce electrical currents to form in the windings that can be used to provide electrical power to other electrical systems.

In certain embodiments, where the system 100 includes a mechanical system 105, the mechanical system 105 may be any device or combination of devices that receive the mechanical energy from the rotor and use the rotating mechanical energy to accomplish one or more physical tasks. For example, the mechanical system 105 may include turbomachinery. As used herein, turbomachinery may refer to machines that transfer energy between the rotor and a fluid. Turbomachinery may include devices like turbines, compressors, pumps, among other machines. Turbomachinery may be used in ultra-high-speed applications; thus, it is desirable that the components of the motor be able to withstand the forces that arise within an electric motor 101 being used in ultra-high-speed applications. While the mechanical system 105 is described in the scope of turbomachinery, the mechanical system 105 may be any system capable of using the mechanical energy provided by the rotor.

In ultra-high-speed applications, the components of the electric motor 101 may be exposed to large mechanical forces. For example, the turbomachinery may be designed to rotate at rates greater than thousands of revolutions per minute. As such, the components of the rotor need to be able to handle the excessive forces that arise in such applications. In some applications, the forces may make the use of windings within the rotor unfeasible due to the risk of breakdown, requiring the use of solid components within the rotor. Further, the rotor and stator may be designed to minimize friction, drag, and other forces that can promote the breakdown of the rotor and stator. For example, bearing systems, air gaps between the rotor and the stator, and other characteristics of the electric motor 101 may be designed to reduce forces that can potentially damage the electric motor 101 at high rotational rates.

In addition to the large mechanical forces, high rotational rates may also cause the components of the electric motor 101 to generate heat. Accordingly, the components of the electric motor 101 may be resistant to breakdown when exposed to the heat produced during the operation of the electric motor 101. In some implementations, the electric motor 101 may include a cooling system that can dissipate the heat produced during the operation of the electric motor 101. For example, the electric motor 101 may include air cooling, liquid cooling, heat exchangers, or other cooling methods that are able to maintain thermal stability and prevent overheating from damaging the electric motor 101.

In some embodiments, the system 100 may also include at least one controller 109 that is able to direct the operation of one or more other components in the system 100. For example, as shown, the controller 109 may control the operation of the power source 107 and the electric motor 101. Additionally, while not shown, the controller 109 may also control the operation of the mechanical system 105. When the controller 109 controls the electric motor 101, the controller 109 may control the rotational speed of the rotor of the electric motor 101. Additionally, the controller 109 may control the torque exerted by the rotor on components within the mechanical system 105.

In certain embodiments, the controller 109 and functions performed by the controller 109 may be executed by hardware or through the execution of instructions performed by one or more processors. For example, the controller 109 and/or other computational devices may be implemented using software, firmware, hardware, or an appropriate combination thereof. The processors or other computational devices may be supplemented by, or incorporated in, specially-designed application-specific integrated circuits (ASICs) or field programmable gate arrays (FPGAs). The processors and other computational devices can also include or function with software programs, firmware, or other computer-readable instructions for carrying out various process tasks, calculations, and control functions used in the methods and systems described herein.

The methods described herein may be implemented or controlled by computer-executable instructions, such as program modules or components, executed by the one or more processors or other computing devices. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein may be implemented in software, firmware, or other computer-readable instructions. These instructions are typically stored on appropriate computer program products that include computer-readable media used to store computer-readable instructions or data structures. The computer-readable media may store computer-readable instructions or data structures. Such a computer-readable medium may be available media that can be accessed by a general-purpose or special-purpose computer or processor, or any programmable logic device.

Suitable computer-readable storage media may include, for example, nonvolatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can carry or store desired program code as computer-executable instructions or data structures.

In additional embodiments, the controller 109 may indirectly control the operation of the electric motor 101 by controlling the power source 107. For example. the power source 107 may be a power supply that can provide high power levels to the electric motor 101. Additionally, the power source 107 may include inverters and rectifiers for converting power between AC and DC as needed. The controller 109 may control the power levels provided by the power source 107 to the electric motor 101 with precise modulation to ensure smooth operation of the electric motor 101 as it rotates at high speeds. Also, the controller 109 may also manage the operation of the power source 107 to prevent voltage spikes, harmonics, and other rotational effects from damaging the electric motor 101, the power source 107, or components within the mechanical system 105.

In further embodiments, the system 100 may include one or more sensors 111 that monitor the operation of the components of the system 100. For example, the sensor 111 may be a monitoring system that is able to detect indicators of system stress, overheating, imbalances, and other operational characteristics of components within the system 100. Further, the sensor 111 may provide sensed measurements to the controller 109, where the controller 109 controls the operation of one or more of the power sources 107, the electric motor 101, and the mechanical system 105.

In certain embodiments, the system 100 may be employed within one of many different types of industries. For example, the system 100 may be employed in Aerospace systems, medical devices, energy production, and many industrial processes. Thus, the electric motor 101 may be able to provide mechanical energy for many different applications. As the system 100 is an important part of many different applications, it is important to ensure that the electric motors 101 can be reliably produced. As electric motors 101 that are PMMs rely on CREEs to provide the desired performance and acquiring CREEs is subject to supply instabilities, it is desired to use technologies in the electric motor 101 that are not reliant on CREEs.

In some embodiments, the electric motor 101 may be a synchronous reluctance motor (SynRM) that can be fabricated without using CREEs. A SynRM works by using the reluctance or resistance of magnetic material in the rotor to control the flow of magnetic flux in the rotor. For example, magnetic flux prefers to travel through paths with lower magnetic reluctance (for example, materials with higher permeability like steel) instead of traveling through air or non-magnetic materials. Within an electric motor 101 that functions as a SynRM, a rotor may be fabricated using geometrically designed variations in reluctance that can cause magnetic fields created through a stator to exert a torque on the rotor that causes the rotor to turn synchronously as the magnetic field generated by the stator rotates around the rotor.

In certain embodiments, the stator used within the electric motor 101 that functions as a SynRM may be similar to that employed within other types of electric motors. For example, the stator may be fabricated from laminated steel and be equipped with windings that are connected to receive AC electrical power from the power source 107. Accordingly, when the power source 107 provides the AC power to the stator, the AC current flows through the windings and generates a rotating magnetic field that interacts with the rotor to produce motion. In particular, the magnetic field rotates at a synchronous speed that is determined by the frequency of the AC power supply and the number of poles in the stator.

In additional embodiments, when the electric motor 101 is a SynRM, the rotor is fabricated without windings, magnets, or electric components. In particular, the rotor is designed to create anisotropic magnetic properties where the reluctance to magnetic flux varies in different directions. In particular, the rotor may have regions with low reluctance and regions with high reluctance. The difference in reluctance causes a torque to be exerted on the rotor as the structures of the rotor move to align with the stator's rotating magnetic field to minimize magnetic reluctance. Accordingly, the rotor rotates synchronously with the magnetic field generated by the stator.

In further embodiments, the electric motor 101 may include an air gap between the stator and rotor. The power source 107 for the electric motor 101 may be a drive system that is able to control the speed and torque of the electric motor 101. For example, the power source 107 may be a variable frequency drive, an inverter drive, or other types of drive/control system. In particular, the power source 107 may adjust the frequency and magnitude of the AC power supplied to the electric motor 101 to control the speed and torque of the rotor in the electric motor 101.

By using an electric motor 101 that is a SynRM, the rotor may be fabricated without permanent magnets or rotor windings. Thus, a SynRM may be fabricated without CREEs and thus are not subjected to the aforementioned issues related to using CREEs. Also, because a SynRM lacks permanent magnetics, the rotor may be less susceptible to the degradation of magnetic materials that can occur over time with magnetic materials or when magnetic materials are subjected to high temperatures.

In certain embodiments, when fabricating the portion of the rotor that is within the electric motor 101, the portion may be fabricated using a lamination of different alternating regions where each region in the lamination has a different relative permeability than a neighboring region in the lamination. Further, within the lamination, the rotor may include interface layers that act as intermediaries for each of the neighboring regions. For example, a first region of the alternating regions may be fabricated from a magnetic material, and a second region of the alternating regions may be fabricated from a non-magnetic material. Additionally, the fabrication methods or manufacturing processes used to fabricate the alternating regions may cause elements in the magnetic material of the first region and the non-magnetic material of the second region to diffuse into the interface layers, such that the interface layers include a combination of the magnetic material and the non-magnetic material, where the combination is based on the used fabrication method.

Relative permeability (µᵣ) is a measure of the ability of a measure to enhance or support an applied magnetic field compared to a vacuum. The relative permeability is a dimensionless quantity that expresses the ratio of the absolute permeability (µ) for a material to the permeability of free space (µₒ). Absolute permeability describes the ability of magnetic fields to form within the material, which is measured in Henries/meter. The permeability of free space is a constant describing the permeability within a vacuum and is equal to 4*π* × 10⁻⁷ Henries/meter. Accordingly, the relative permeability quantifies the ability of a material to support magnetic fields relative to a vacuum and provides insights into the magnetic behavior of materials. Materials may be categorized based on their relative permeability. For example, relative permeabilities allow materials to be separated into different categories. For example, materials may be divided into ferromagnetic materials, paramagnetic materials, and diamagnetic materials. In ferromagnetic materials, the atomic structure of the material may have atomic magnetic moments that align in the same direction in response to applied external magnetic fields, leading to an amplification of the internal magnetic field strength. Non-ferromagnetic materials (paramagnetic and diamagnetic) do not have atomic structures that respond to external magnetic fields and exhibit weak magnetic fields.

In some embodiments, the first region may be fabricated from a magnetic material having a relative permeability greater than or equal to ten. Accordingly, the materials used for the first region may be ferromagnetic and exhibit strong magnetic responses. The magnetic material within the first region may have a high magnetic susceptibility to external magnetic fields. Thus, when an external magnetic field is applied to the material of the first region, a strong internal magnetic field develops within the first region. Examples of magnetic materials having a relative permeability greater than or equal to 10 may include iron, nickel, cobalt, ferrites, silicon steel, among other materials and alloys including other elements like carbon, manganese, aluminum, chromium, among other elements.

In additional embodiments, the second region may be fabricated from nonmagnetic materials having relative permeabilities that are less than two. These materials may be diamagnetic or paramagnetic and have a slight repulsion to magnetic fields or a weak attraction to magnetic fields. Thus, the weak response of these materials to magnetic fields does not significantly enhance or alter applied magnetic fields. Additionally, these materials do not retain magnetization after exposure to magnetic fields. Examples of non-magnetic materials with a relative permeability of less than two include diamagnetic materials like copper, gold, silver graphite, organic compounds, and various alloys. These non-magnetic materials also include paramagnetic materials like aluminum, platinum, magnesium, molybdenum, tungsten, and various alloys.

In further embodiments, the magnetic material of the first region may be constrained to have various concentrations of particular materials. For example, in at least one implementation, the first region may include concentrations of silicon that are 1% to 10% in weight. In additional implementations, the first region may include concentrations of aluminum that are 1% to 10% in weight. In some implementations, the first region may include concentrations of cobalt that are 40% to 55% in weight. In further implementations, the first region may include concentrations of nickel that are 40% to 55% in weight. Moreover, implementations of the first region may include concentrations of carbon that are 0.001% to 1.5% in weight and concentrations of manganese that are 0.001% to 2% in weight. Also, implementations of the first region may include concentrations of chromium that are 9% to 28% in weight. The above description of various compositions is exemplary of potential materials that can be used as the magnetic materials and is not intended to be an exhaustive list of materials that can be used for the magnetic material of the first region

In additional embodiments, the non-magnetic material of the second region may be constrained to have various concentrations of particular materials. For example, in at least one implementation, the second region may include concentrations of nickel that are 40% to 77% in weight and concentrations of chromium that are 10% to 35% in weight. In additional implementations, the second region may include concentrations of molybdenum that are 8% to 30% in weight. In some implementations, the second region may include concentrations of cobalt that are 10% to 35% in weight. In further implementations, the second region may include concentrations of chromium that are 16.5% to 26.5% in weight, concentrations of carbon that are 0.001% to 0.26% in weight, and concentrations of nickel that are 7% to 36% in weight. Moreover, implementations of the second region may include concentrations of beryllium that are 0.3% to 3.5% in weight and concentrations of copper that are 80% to 98% in weight. The above description of various compositions is exemplary of potential materials that can be used as the non-magnetic materials and is not intended to be an exhaustive list of materials that can be used for the non-magnetic material of the second region.

In certain embodiments, the alternating regions of the lamination may be joined together using one or more of various fabrication processes that are suitable for joining different materials to one another. In particular, the joining processes may alternate between joining non-magnetic material to an external magnetic material surface of the component and joining magnetic material to an external non-magnetic material surface of the component. Further, the joining process may cause the formation of an interfacing layer between the different regions that are formed from the diffusion of the neighboring materials into each other. For example, the joining processes may include welding joining processes, brazing joining processes, additive manufacturing processes, sintering processes, and other joining processes.

In some embodiments, a welding joining process may join non-magnetic material of a second region to magnetic material of a first region. For example, when welding, surfaces of different materials are brought in close proximity to each other, and then the surfaces of the materials are brought to their melting points, allowing them to mix and fuse together after cooling, creating an interface layer as described above. Common types of welding include arc welding, gas welding, resistance welding, and stir welding. Welding joining processes may form strong, durable bonds and be suited for use in various applications. Accordingly, a surface of the non-magnetic material may be placed against a surface of the magnetic material, and then the surfaces may be welded to each other.

In additional embodiments, a brazing joining process may join non-magnetic material of a second region to magnetic material of a first region. For example, when brazing, two surfaces of different materials are brought in close proximity to each other, then a filler metal having a lower melting point than the non-magnetic material, and the magnetic material is melted and allowed to flow between the two surfaces and join the two surfaces to each other. Common types of brazing include torch brazing, furnace brazing, and induction brazing. Brazing can join dissimilar materials while limiting thermal distortions. Accordingly, a surface of the non-magnetic material may be placed against a surface of the magnetic material, and then filler material is melted between the surfaces and then allowed to cool, joining the non-magnetic material to the magnetic material.

In further embodiments, an additive manufacturing process may be used to join non-magnetic material and magnetic material. Additive manufacturing processes are used to add material to a surface by depositing material on the surface layer by layer. 3D printing is an example of an additive manufacturing process. Common types of additive manufacturing processes include fused deposition modeling, stereolithography, selective laser sintering, and direct metal laser sintering. When using an additive manufacturing process to add non-magnetic material to magnetic material, layers of non-magnetic material may be deposited layer by layer or otherwise built up on a surface of magnetic material. When using an additive manufacturing process to add magnetic material to non-magnetic material, layers of magnetic material may be deposited layer by layer or otherwise built up on a surface of non-magnetic material.

In additional embodiments, a sintering process may be used to form a component where non-magnetic materials are joined to magnetic materials. In a sintering process, powdered materials are compacted and heated below their melting points to bond particles together. Common types of sintering include solid-state sintering, liquid-phase sintering, and spark plasma sintering. Sintering processes can be used to form components with layers of magnetic and non-magnetic materials. For example, magnetic powdered material can be placed next to non-magnetic powdered material, where the combination of materials is pressed and heated. The pressing and heating cause the powdered materials to bond to each other. Sintering allows for the precise control and manufacture of uniform parts.

In certain embodiments, by using manufacturing processes that enable the formation of alternating regions of magnetic and non-magnetic materials, a magnetic component may be formed that can be used for multiple purposes. In particular, the magnetic component may be used as a rotor within an electric motor 101. When the alternating regions of magnetic materials and non-magnetic materials are used, as disclosed herein, external magnetic fields can move through the magnetic material in ways that cause the rotor to rotate around an axis and convert electrical energy into mechanical energy.

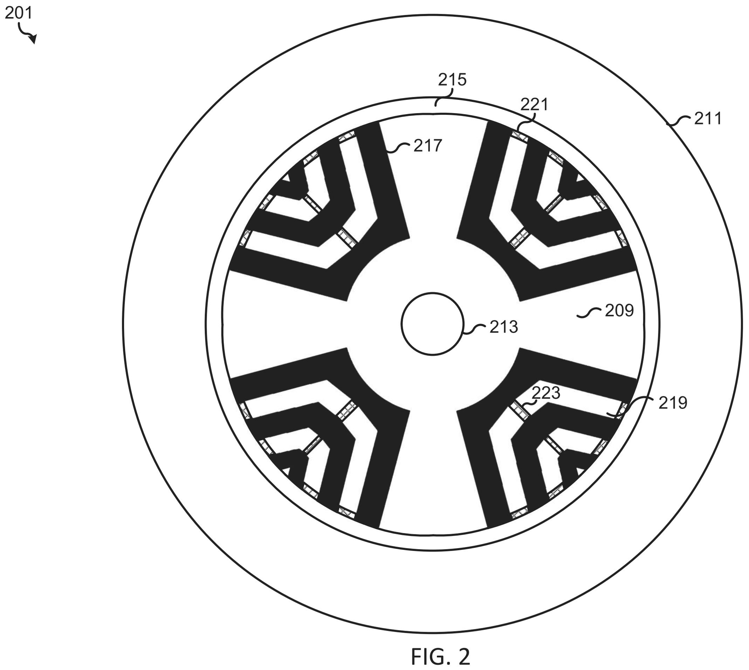

FIG. 2 is a diagram of a cross-section 201 of an exemplary electric motor 101 that includes a stator 211 and a rotor 209. The stator 211 and the rotor 209 function in a similar manner to the stator and the rotor described above in connection with FIG. 1. As illustrated, the stator 211 and the rotor 209 are separated by an air gap 215. The stator 211 receives electric power that causes windings within the stator 211 to generate electric fields that exert forces upon the rotor 209 across the air gap 215. The electric fields cause magnetic fields to flow within the rotor 209, which causes the rotor 209 to rotate. Further, the rotor 209 may be rigidly connected to a shaft 213 that extends out of the electric motor. Thus, as the rotor 209 rotates in response to the electric fields exerted by the stator 211, the shaft 213 may transfer mechanical energy out of the electric motor 101 for use by one or more other systems.

In certain embodiments, the rotor may be composed of alternating laminations of magnetic and nonmagnetic materials. As shown, the rotor 209 may have multiple lamination sections, where each lamination section includes a lamination of magnetic and nonmagnetic materials. Further, each lamination section may include layers of a first region 217 and layers of a second region 219. The first region 217 is fabricated from a magnetic material, and the second region 219 is fabricated from a non-magnetic material. Further, in some embodiments, the other portions of the rotor 209 that are not associated with the lamination may be made from the magnetic material, the non-magnetic material, or a different material.

In additional embodiments, the rotor 209 may include ribs 223 and bridges 221, where the ribs 223 and the bridges 221 extend through the second regions 219 to connect different layers of the first regions 217 to one another. As shown, the ribs 223 extend along a radius of the rotor 209, and the bridges 221 extend along a circumference of the rotor 209. The ribs 223 and the bridges 221 can allow magnetic fields to flow between the different regions in a controlled manner. Also, the ribs 223 and the bridges 221 can add structural strength to the rotor 209. The thickness of the ribs and bridges can be controlled to balance out the stress on the rotor 209 and the torque experienced by the rotor 209 in response to the magnetic fields exerted on the rotor 209 by the stator 211.

By using the different layers of magnetic first regions 217 and non-magnetic second regions 219, a magnetic component may be formed that is suitable for use in a rotor 209 without using CREEs that can provide similar performance to the rotors found in PMMs that use CREEs.

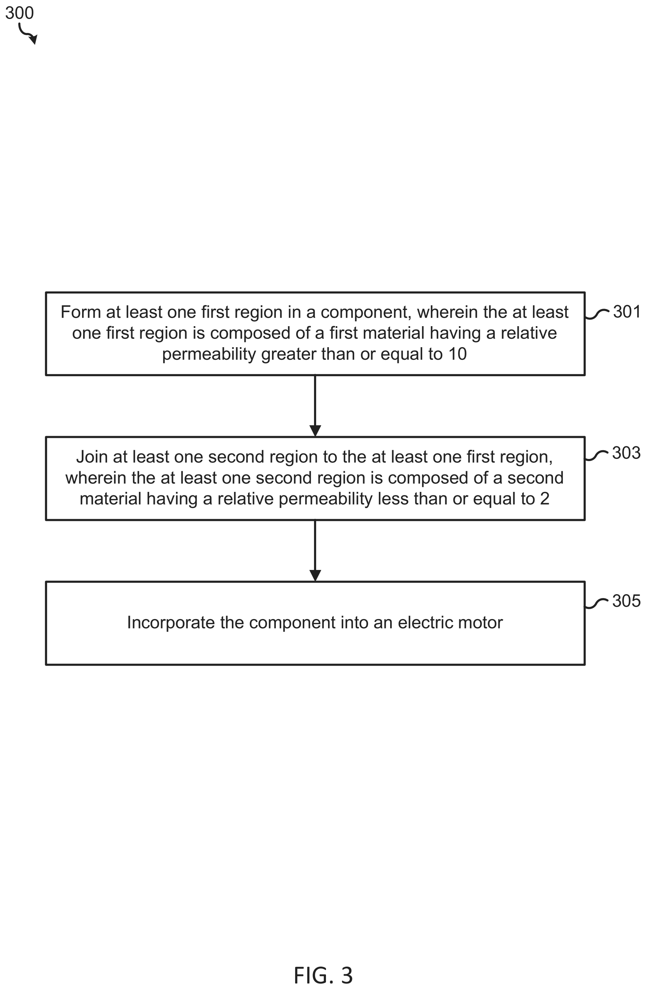

FIG. 3 is a flowchart diagram of a method 300 for fabricating a magnetic component composed of alternating regions of magnetic and non-magnetic materials. The method 300 proceeds at 301, where at least one first region in a component is formed, wherein the at least one first region is composed of a first material having a relative permeability greater than or equal to ten. Additionally, the method 300 proceeds at 303, where at least one second region is joined to the at least one first region, wherein the at least one second region is composed of a second material having a relative permeability less than or equal to 2. For example, when joining a first region to a second region or vice versa, a manufacturing process may be used that causes elements of the first material and the second material to diffuse into an interface layer that interfaces the at least one first region with the at least one second region. In particular, the manufacturing process may be at least one of a welding joining process, a brazing joining process, an additive manufacturing process, and a sintering process. After joining the at least one first region and the at least one second region, the method 300 proceeds at 305, where the component is incorporated into an electric motor. For example, the component may be a rotor for use in a SynRM. Accordingly, the component may be used to improve the performance of electric motors while providing electric motor solutions that are not reliant on CREEs.

### Example Embodiments

Example 1 includes an apparatus comprising: a magnetic component, wherein the magnetic component comprises: a first region composed of a first material having a relative permeability greater than or equal to 10; a second region composed of a second material having a relative permeability less than or equal to 2, wherein the magnetic component comprises alternating layers of the first region and the second region; and an interface layer between each of the alternating layers of the first material and the second material; wherein the first material and the second material have elements diffuse into the interface layer at conditions associated with a manufacturing process, wherein the manufacturing process is at least one of: a welding joining process; a brazing joining process; an additive manufacturing process; and a sintering process.

Example 2 includes the apparatus of Example 1, wherein the magnetic component is part of a rotor in an electric motor.

Example 3 includes the apparatus of Example 2, wherein the electric motor is a synchronous reluctance motor (SynRM).

Example 4 includes the apparatus of any of Examples 1-3, wherein the first region comprises a concentration of silicon that is 1% to 10% in weight.

Example 5 includes the apparatus of Example 4, wherein the second region comprises: a first concentration that is Example 16.5% to Example 26.5% in weight; a second concentration that is Example 0.001% to any of Examples 0-4.26% in weight; and a third concentration that is 7% to 36% in weight.

Example 6 includes the apparatus of any of Examples 4-5, wherein the first region comprises an additional concentration of aluminum that is 1% to 10% in weight.

Example 7 includes the apparatus of any of Examples 1-6, wherein the first region comprises a concentration of cobalt that is 40% to 55% in weight.

Example 8 includes the apparatus of any of Examples 1-7, wherein the first region comprises a concentration of nickel that is 40% to 55% in weight.

Example 9 includes the apparatus of any of Examples 1-8, wherein the first region comprises: a first concentration of carbon that is Example 0.001% to any of Examples 1-8.5% in weight; and a second concentration of manganese that is Example 0.001% to 2% in weight.

Example 10 includes the apparatus of Example 9, wherein the first region comprises a third concentration of chromium in the first region that is 9% to 28% in weight.

Example 11 includes the apparatus of any of Examples 1-10, wherein the second region comprises: a first concentration of nickel that is 40% to 77% in weight; and a second concentration of chromium that is 10% to 35% in weight.

Example 12 includes the apparatus of Example 11, wherein the second region further comprises a third concentration of molybdenum that is 8% to 30% in weight.

Example 13 includes the apparatus of any of Examples 11-12, wherein the second region further comprises a third concentration of cobalt that is 10% to 35% in weight.

Example 14 includes a method comprising: forming at least one first region in a component, wherein the at least one first region is composed of a first material having a relative permeability greater than or equal to 10; joining at least one second region to the at least one first region, wherein the at least one second region is composed of a second material having a relative permeability less than or equal to 2, wherein the at least one second region is joined to the at least one first region using a manufacturing process that causes elements of the first material and the second material to diffuse into an interface layer that interfaces the at least one first region with the at least one second region, wherein the manufacturing process that is at least one of: a welding joining process; a brazing joining process; an additive manufacturing process; and a sintering process; and incorporating the component into an electric motor.

Example 15 includes the method of Example 14, further comprising forming one or more bridges and one or more ribs that extend through second regions in the at least one second region and connect different first regions in the at least one first region to one another.

Example 16 includes the method of any of Examples 14-15, wherein the at least one first region comprises a concentration of silicon that is 1% to 10% in weight.

Example 17 includes the method of any of Examples 14-16, wherein the at least one first region comprises a concentration of cobalt that is 40% to 55% in weight.

Example 18 includes the method of any of Examples 14-17, wherein the at least one first region comprises: a first concentration of carbon that is Example 0.001% to any of Examples 1-17.5% in weight; and a second concentration of manganese that is Example 0.001% to 2% in weight.

Example 19 includes the method of any of Examples 14-18, wherein the at least one second region comprises: a first concentration of nickel that is 40% to 77% in weight; and a second concentration of chromium that is 10% to 35% in weight.

Example 20 includes an electric motor comprising: a stator configured to generate electric fields; and a rotor configured to rotate in response to the generated electric fields, wherein the rotor comprises: a plurality of first regions composed of a first material having a relative permeability greater than or equal to 10; a plurality of second regions composed of a second material having a relative permeability less than or equal to 2, wherein the rotor comprises alternating layers of the first region and the second region; and an interface layer between each of the alternating layers of the first material and the second material; wherein the first material and the second material have elements diffuse into the interface layer at conditions associated with a manufacturing process, wherein the manufacturing process is at least one of: a welding joining process; a brazing joining process; an additive manufacturing process; and a sintering process.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. An apparatus comprising:
a magnetic component (209), wherein the magnetic component (209) comprises:
a first region (217) composed of a first material having a relative permeability greater than or equal to 10;
a second region (219) composed of a second material having a relative permeability less than or equal to 2, wherein the magnetic component comprises alternating layers of the first region (217) and the second region (219); and
an interface layer between each of the alternating layers of the first material and the second material;
wherein the first material and the second material have elements diffuse into the interface layer at conditions associated with a manufacturing process, wherein the manufacturing process is at least one of:
a welding joining process;
a brazing joining process;
an additive manufacturing process; and
a sintering process.

2. The apparatus of claim 1, wherein the magnetic component (209) is part of a rotor in an electric motor.

3. The apparatus of claim 2, wherein the electric motor is a synchronous reluctance motor (SynRM).

4. The apparatus of claim 1, wherein the first region (217) comprises a concentration of silicon that is 1% to 10% in weight.

5. The apparatus of claim 1, wherein the first region (217) comprises a concentration of cobalt that is 40% to 55% in weight.

6. The apparatus of claim 1, wherein the first region (217) comprises a concentration of nickel that is 40% to 55% in weight.

7. The apparatus of claim 1, wherein the first region (217) comprises:
a first concentration of carbon that is 0.001% to 1.5% in weight; and
a second concentration of manganese that is 0.001% to 2% in weight.

8. The apparatus of claim 1, wherein the second region (219) comprises:
a first concentration of nickel that is 40% to 77% in weight; and
a second concentration of chromium that is 10% to 35% in weight.

9. A method comprising:
forming at least one first region (217) in a component (209), wherein the at least one first region (217) is composed of a first material having a relative permeability greater than or equal to 10;
joining at least one second region to the at least one first region (217), wherein the at least one second region (219) is composed of a second material having a relative permeability less than or equal to 2, wherein the at least one second region (219) is joined to the at least one first region (217) using a manufacturing process that causes elements of the first material and the second material to diffuse into an interface layer that interfaces the at least one first region (217) with the at least one second region (219), wherein the manufacturing process that is at least one of:
a welding joining process;
a brazing joining process;
an additive manufacturing process; and
a sintering process; and
incorporating the component into an electric motor.

10. The method of claim 9, further comprising forming one or more bridges (221) and one or more ribs (223) that extend through second regions in the at least one second region (219) and connect different first regions in the at least one first region (217) to one another.
